# EUROPÄISCHE PATENTSCHRIFT

(11) **EP 3 634 299 B1**
(45) Veröffentlichungstag und Bekanntmachung des Hinweises auf die Patenterteilung: **22.12.2021**
(21) Anmeldenummer: 19737011.7
(22) Anmeldetag: 26.06.2019
(51) Int. Cl.: A61C 8/00

(54) **ZAHNPROTHESE**
DENTAL PROSTHESIS
PROTHÈSE DENTAIRE

(30) Priorität: 27.08.2018 DE 102018120901; 27.08.2018 DE 202018104914 U
(43) Veröffentlichungstag der Anmeldung: 15.04.2020
(62) Teilanmeldung aus: 19212689.4
(73) Patentinhaber: TRI Dental Implants Int. AG, 6331 Hünenberg (CH)
(72) Erfinder: Venanzoni, Sandro, 8051 Zürich (CH); Perez, Rafael, 79106 Freiburg (DE); Kast, Holger, 6331 Hünenberg (CH)
(74) Vertreter: Witte, Weller & Partner Patentanwälte mbB
(86) Internationale Anmeldenummer: PCT/EP2019/066960
(87) Internationale Veröffentlichungsnummer: WO 2020/043347

(56) Entgegenhaltungen:
- EP-A1- 2 380 525
- WO-A1-2018/108296
- WO-A2-2008/024062

## Beschreibung

Die vorliegende Erfindung betrifft eine Zahnprothese. Genauer gesagt, betrifft die vorliegende Erfindung eine Zahnprothese, bei der eine Suprakonstruktion mit Hilfe einer Schraube direkt, also ohne die sonst übliche Verwendung eines dazwischen angeordneten Abutments, mit einem Zahnimplantat verbunden ist.

Eine gattungsgemäße Zahnprothese dieser Art ist bereits aus der von der Anmelderin eingereichten Patentanmeldung DE 10 2018 113 237.9 bekannt. Eine Zahnprothese, die die Grundlage für den Oberbegriff des Anspruchs 1 bildet, ist aus der EP 2 380 525 A1 bekannt. Weitere beispielhafte Zahnprothesen sind aus der WO 2008/024062 A2 und der WO 2018/108296 A1 bekannt.

Der Begriff "Zahnimplantat" wird umgangssprachlich häufig uneinheitlich und oft fälschlicherweise für das Gesamtgebilde einer Zahnprothese verwendet. Daher sei an dieser Stelle klargestellt, dass unter einem "Zahnimplantat" im medizinischen und vorliegenden Sinne nur der Implantatkörper verstanden wird, also die künstliche Zahnwurzel, die im Kiefer des Patienten implantiert wird. Häufig wird anstelle des Begriffs "Zahnimplantat" daher auch der Begriff "Implantatkörper" verwendet. Im Weiteren wird jedoch einheitlich der Begriff "Zahnimplantat" für den genannten Teil der Zahnprothese verwendet.

Herkömmliche Zahnprothesen weisen zusätzlich zu dem Zahnimplantat ein sogenanntes Abutment auf, welches als Verbindungsteil zwischen dem Zahnimplantat und der Implantatkrone (Suprakonstruktion) fungiert. Das Abutment bildet den sensiblen Übergang durch das periimplantäre Weichgewebe zur Mundhöhle und zur Suprakonstruktion. Derartige Abutments werden teilweise auch als "Stützpfeiler" oder als "Implantatpfosten" bezeichnet. Üblicherweise sind Abutments aus Titan, Keramik oder Keramikverbundstoffen wie Aluminiumoxid- oder Zirkondioxidkeramik.

Die Suprakonstruktion, also die künstliche Zahnkrone, ist typischerweise aus Keramik oder einem vergleichbaren Werkstoff. Traditionell wird die Suprakonstruktion von einem Zahntechniker wie folgt hergestellt: Zunächst wird ein Wachsmodell für die künstliche Zahnkrone erzeugt. Dann wird anhand des Wachsmodells die künstliche Zahnkrone gegossen. Das Abutment wird manuell auf die richtige Größe und Form abgeschliffen, um im letzten Schritt die gegossene, künstliche Zahnkrone auf das Abutment zu montieren. Meist erfolgt die Montage durch Verkleben der Suprakonstruktion mit dem Abutment. Durch diesen größtenteils manuell durchgeführten Prozess lassen sich hochpräzise Ergebnisse erzielen. Es versteht sich jedoch, dass das zeitaufwändig und damit auch kostenintensiv ist. Zudem ergibt sich eine Klebefuge zwischen der Suprakonstruktion und dem Abutment, welche anfällig für Undichtigkeiten ist und zudem die Langlebigkeit der Zahnprothese einschränken kann.

Heutzutage gibt es vielerlei Bestrebungen, den o.g. Prozess weitest möglich zu digitalisieren bzw. zu automatisieren. Die Suprakonstruktion wird mittlerweile häufig anhand eines 3D-Modells auf einer Fräsmaschine gefräst. Bei dieser Art der Herstellung wird direkt die Anschlussgeometrie für den Anschluss bzw. die Verbindung mit dem Abutment in die Suprakonstruktion auf deren Hinterseite eingebracht. Die Form und Größe des Abutments muss daher bereits bei der Herstellung der künstlichen Zahnkrone bekannt sein, um die Fräsmaschine entsprechend programmieren zu können. Dies wird meist anhand eines CAD-Modells des Abutments gemacht, welches in die Steuerung der Fräsmaschine eingelesen wird.

Da die Form und Größe des Abutments bereits vor der Herstellung der Suprakonstruktion bekannt sein muss, wählen viele Hersteller ein kurzes und kleines Abutment, das für jede Anatomie passt. Bei länglichen, also vergleichsweise langen Suprakonstruktionen ist ein kurzes und kleines Abutment im Verhältnis zu der Suprakonstruktion allerdings biomechanisch unpassend, so dass es zu Lockerungen oder Brüchen kommen kann.

Andere Hersteller lösen dies durch viele unterschiedliche Abutments. Je nach Form und Größe der Suprakonstruktion werden dann unterschiedlich große bzw. unterschiedlich geformte Abutments verwendet. So muss für einen künstlichen Schneidezahn beispielsweise ein anderes Abutment verwendet werden als für einen künstlichen Backenzahn. Ist bei der Verwendung für einen künstlichen Schneidezahn beispielsweise die hintere Flanke des Abutments nicht abgeschrägt, so wäre das Abutment auf der Hinterseite der Suprakonstruktion sichtbar, was schon aus rein ästhetischen Gesichtspunkten unerwünscht ist. Dieses Problem ergibt sich bei der Verwendung für einen künstlichen Backenzahn dagegen möglicherweise nicht.

Bei der automatisierten Herstellung mit digitalen CAD-Modellen werden für den Hersteller der Suprakonstruktion üblicherweise mehrere CAD-Datensätze bereitgestellt, welche die unterschiedlichen Formen der Abutments abbilden. Gleichzeitig muss der Hersteller der Suprakonstruktion eine Vielzahl von Abutments unterschiedlicher Formen und Größen auf Lager halten. Dies gestaltet sich vielfach als umständlich und erzeugt darüber hinaus hohe Lagerkosten.

Die Nachteile der bisherigen Herangehensweisen lassen sich also wie folgt zusammenfassen: Zum einen schränkt die Verwendung von Abutments die Form- und Gestaltungsfreiheit der Suprakonstruktion inklusive deren transgingivalen Anteils ein. Ein nicht flexibler transgingivaler Anteil der Suprakonstruktion kann vor allem Probleme beim Weichgewebsmanagement hervorrufen. Ein ideales Weichgewebsmanagement ist allerdings entscheidend für ein ästhetisches Ergebnis und ein langfristig stabiles Knochenniveau. Zum anderen sind die Material- und Herstellungskosten für eine solche Zahnprothese gemäß dem Stand der Technik relativ hoch. Darüber hinaus ergibt sich eine in vielerlei Hinsicht nachteilhafte Klebefuge zwischen der Suprakonstruktion und dem Abutment.

In der eingangs genannten Patentanmeldung DE 10 2018 113 237.9 wird ein völlig neuer Ansatz vorgestellt, bei dem eine Zahnprothese auch ohne Abutment auskommt. Das Zahnimplantat weist hierzu eine speziell geformte Schnittstelle auf, die eine Befestigung der Suprakonstruktion unmittelbar und direkt an dem Zahnimplantat ermöglicht. Aufgrund der speziellen Ausgestaltung dieser Schnittstelle lässt sich die Suprakonstruktion eindeutig definiert an der Schnittstelle des Zahnimplantats anordnen. Dies ermöglicht eine eindeutig definierte Relativposition zwischen Suprakonstruktion und Zahnimplantat.

Die in der Patentanmeldung DE 10 2018 113 237.9 vorgestellte Schnittstelle zwischen Suprakonstruktion und Zahnimplantat ermöglicht eine stabile und dichte, direkte Verbindung zwischen der Suprakonstruktion und dem Zahnimplantat. Darüber hinaus ist die Schnittstelle sehr einfach und kostengünstig herstellbar, da sie sich auf einer Fräsmaschine ohne größere Probleme automatisiert herstellen lässt. Die Form der Schnittstelle genügt allen mechanischen Anforderungen an eine unmittelbare Verbindung von Titan (typischer Werkstoff, aus dem das Zahnimplantat hergestellt ist) und Keramik (typischer Werkstoff, aus dem die Suprakonstruktion hergestellt ist). Die Form der Schnittstelle genügt auch den Anforderungen an eine unmittelbare Verbindung von Titan mit Titan, für einen Fall, in dem sowohl die Suprakonstruktion als auch das Zahnimplantat aus Titan hergestellt sind. Zudem eignet sich die Schnittstelle für den eingangs genannten Herstellungsprozess, bei dem die Suprakonstruktion anhand eines CAD-Modells automatisiert gefertigt wird (beispielsweise durch spanabhebende oder additive Fertigungsverfahren).

Wenngleich sich die direkte Verbindung zwischen Suprakonstruktion und Zahnimplantat als überaus vorteilhaft herausgestellt hat, gibt es dennoch Anlass zu einer technischen Verbesserung dieser Art der direkten Verbindung.

Es ist daher eine Aufgabe der vorliegenden Erfindung eine Zahnprothese der oben genannten Art bereitzustellen, bei der die Verbindung zwischen Suprakonstruktion und Zahnimplantat noch weiter verbessert wird. Dabei ist es insbesondere eine Aufgabe, die Verbindungstechnik in Bezug auf deren Stabilität und Nachhaltigkeit zu verbessern.

Diese Aufgabe wird gemäß Anspruch 1 durch eine Zahnprothese gelöst, die folgende Bauteile aufweist:
- ein Zahnimplantat mit einem Außengewinde zum Einschrauben des Zahnimplantats in einen Kieferknochen und mit einem im Inneren des Zahnimplantats angeordneten Innengewinde;
- eine Suprakonstruktion mit einer internen Bohrung; und
- eine Schraube zur Befestigung der Suprakonstruktion an dem Zahnimplantat,
   wobei die Schraube einen Schraubenkopf mit einer zylindrischen oder konischen Mantelfläche und einen sich an ein unteres Ende des Schraubenkopfes anschließenden Schaft aufweist, an dem ein Außengewinde angeordnet ist,
   wobei in montiertem Zustand der Zahnprothese die Schraube durch die interne Bohrung der Suprakonstruktion in das Zahnimplantat eingesetzt ist und das Außengewinde der Schraube in das Innengewinde des Zahnimplantats eingreift,
   wobei der Schraubenkopf zwischen der zylindrischen oder konischen Mantelfläche und seinem unteren Ende ein konvex abgerundetes Kinn aufweist, mit dem die Schraube in montiertem Zustand der Zahnprothese in der internen Bohrung an der Suprakonstruktion anliegt, und
   wobei (i) die zylindrische oder konische Mantelfläche des Schraubenkopfes an der Suprakonstruktion in der internen Bohrung anliegt, und/oder (ii) wobei der Schaft in einem oberen Bereich, welcher an das untere Ende des Schraubenkopfes angrenzt, einen zylindrischen Abschnitt ohne Gewinde aufweist, der in montiertem Zustand der Zahnprothese an dem Zahnimplantat anliegt.

Eine wesentliche Verbesserung der erfindungsgemäßen Zahnprothese ist insbesondere in der Art der Ausgestaltung der Schraube zu sehen, welche die Suprakonstruktion mit dem Zahnimplantat verbindet. Der Schraubenkopf der Schraube weist an seinem unteren Ende ein konvex abgerundetes Kinn auf, mit dem die Schraube in montiertem Zustand der Zahnprothese an der Suprakonstruktion in der internen Bohrung anliegt. Dieses konvex abgerundete Kinn des Schraubenkopfes verbessert die Kraftübertragung zwischen der Schraube und der Suprakonstruktion. Aufgrund der Abrundung am unteren Ende des Schraubenkopfes (am Kinn des Schraubenkopfes) kann die von der Schraube ausgeübte Kraft ideal in die Suprakonstruktion eingeleitet werden. Unerwünschte Scherkräfte können dadurch vermieden werden. Da die Suprakonstruktion vorzugsweise aus Keramik hergestellt ist, lässt sich dadurch eine unerwünschte Rissbildung innerhalb der Suprakonstruktion vermeiden.

Ein weiterer Vorteil des Schraubenkopfes, der zusätzlich zu dem abgerundeten Kinn oberhalb dessen eine zylindrische oder konische Mantelfläche aufweist, ist die dadurch verbesserte Stabilität der Verbindung zwischen der Schraube und der Suprakonstruktion. Unerwünschte Relativbewegungen zwischen der Suprakonstruktion und der Schraube, welche ansonsten im Laufe der Zeit entstehen könnten, lassen sich durch den speziell geformten Schraubenkopf, der in montiertem Zustand der Zahnprothese an der Suprakonstruktion anliegt, wirksam vermeiden.

Das konvex abgerundete Kinn hat ferner den Vorteil, dass sich die Schnittstelle zwischen der Schraube und der Suprakonstruktion einfacher herstellen lässt. Die Suprakonstruktion weist an der Verbindungsstelle mit der Schraube innerhalb der internen Bohrung vorzugsweise eine entsprechend geformte, konkav abgerundete Anlagefläche auf, mit der das Kinn des Schraubenkopfes an der Suprakonstruktion anliegt. Sowohl das konvex abgerundete Kinn als auch die als Gegenstück fungierende, konkav abgerundete Anlagefläche in der internen Bohrung der Suprakonstruktion lassen sich sehr einfach mithilfe einer Fräsmaschine fertigen. Die Rundungen lassen sich auf einer Fräsmaschine insbesondere im Gegensatz zu scharfkantigen oder eckigen Schnittstellen wesentlich einfacher und damit kostengünstiger fertigen.

Unter dem Begriff "konvex abgerundet" wird vorliegend eine nach außen gewölbte Wölbung verstanden. Unter dem Begriff "konkav abgerundet" wird hingegen eine nach innen gewölbte Mulde verstanden. Lediglich zur Klarstellung wird zusätzlich zu den Begriffen "konvex" und "konkav" der Begriff "abgerundet" verwendet, wenngleich die Begriffe "konvex" und "konkav" eine solche Rundung bzw. Abrundung bereits implizieren. Das konvex abgerundete Kinn und die als Gegenstück fungierende, konkav abgerundete Anlagefläche an der Suprakonstruktion weisen vorzugsweise jeweils eine stetige Tangentensteigung (ohne "Knick") auf.

Des Weiteren sei an dieser Stelle erwähnt, dass der Begriff "interne Bohrung" vorliegend breit auszulegen ist, da es nicht zwangsläufig notwendig ist, diese Bohrung mithilfe eines Bohrers herzustellen. Die interne Bohrung lässt sich genauso gut auch auf einer Fräsmaschine oder im Falle einer additiven Fertigung der Suprakonstruktion bereits unmittelbar bei der Herstellung als Aussparung erzeugen. Unter der internen Bohrung soll also lediglich allgemein eine kanalartige Öffnung verstanden werden, durch welche die Schraube durch die Suprakonstruktion hindurch in das Zahnimplantat einführbar ist. Typischerweise wird diese kanalartige Öffnung bzw. interne Bohrung nach der Verbindung der Suprakonstruktion mit dem Zahnimplantat an ihrer Oberseite verschlossen, so dass eine geschlossene bzw. versiegelte Suprakonstruktion entsteht.

Wie bereits erwähnt, liegt die Suprakonstruktion in montiertem Zustand der Zahnprothese unmittelbar an dem Zahnimplantat an. Genauer gesagt, liegt vorzugsweise die Unterseite der Suprakonstruktion an der Oberseite des Zahnimplantats an. Vorzugsweise wird dabei kein Abutment verwendet, welches wie sonst üblich den Übergang zwischen der Suprakonstruktion und dem Zahnimplantat bildet. Die Schnittstelle zwischen dem Zahnimplantat und der Suprakonstruktion kann beispielsweise so ausgestaltet sein, wie es bereits in der Patentanmeldung DE 10 2018 113 237.9 vorgestellt wurde. Ohne den Rahmen der vorliegenden Erfindung zu verlassen, sind grundsätzlich jedoch auch anders geformte Schnittstellen möglich, die eine direkte Verbindung der Suprakonstruktion mit dem Zahnimplantat ohne Abutment ermöglichen.

Gemäß einer bevorzugten Ausgestaltung hat das Kinn des Schraubenkopfes einen runden Querschnitt.

Ein solches rundes Kinn ermöglicht eine ideale Krafteinleitung in die Suprakonstruktion, da die Kräfte dann exakt radial am Kinn in die Suprakonstruktion eingeleitet werden. Zudem lässt sich ein rundes Kinn mit einer Fräsmaschine sehr einfach herstellen.

Besonders bevorzugt hat der runde Querschnitt einen Radius von 0,5 mm. Zur Herstellung des Kinns wird vorzugsweise ein Kugelfräser verwendet, welcher typischerweise einen Durchmesser von 1 mm hat, so dass ein Radius von 0,5 mm mit diesem Kugelfräser am einfachsten herstellbar ist.

Gemäß der Erfindung liegt die zylindrische oder konische Mantelfläche des Schraubenkopfes ggf. an der Suprakonstruktion in der internen Bohrung an.

Die interne Bohrung ist an dieser Stelle vorzugsweise ebenfalls zylindrisch ausgestaltet und weist den gleichen Durchmesser oder lediglich einen geringfügig größeren Durchmesser wie die zylindrische oder konische Mantelfläche des Schraubenkopfes auf. Dies verbessert zusätzlich die Stabilität der Verbindung zwischen der Schraube und der Suprakonstruktion.

Gemäß der Erfindung weist der Schaft in einem oberen Bereich, welcher an das untere Ende des Schraubenkopfes angrenzt, ggf. einen zylindrischen Abschnitt ohne Gewinde auf, der in montiertem Zustand der Zahnprothese an dem Zahnimplantat anliegt.

Das Zahnimplantat weist dazu im Bereich seines oberen Endes, also oberhalb des im Inneren des Zahnimplantats angeordneten Innengewindes, eine entsprechend zylindrisch geformte Anlagefläche auf, an der der genannte zylindrische Abschnitt des Schrauben-Schafts anliegt. Durch diesen zylindrischen Abschnitt wird die Schraube zu einem stabilen Pfosten innerhalb des Zahnimplantats, der die Suprakonstruktion zusätzlich abstützen kann. Dies ist insbesondere in Bezug auf die Stabilität der Verbindung von Zahnimplantat und Suprakonstruktion von Vorteil und ermöglicht eine zusätzliche Abstützung, die insbesondere bei der Herstellung der Suprakonstruktion aus einem relativ weichen Material vorteilhaft ist.

Der zylindrische Abschnitt des Schafts weist vorzugsweise einen Durchmesser auf, der gleich groß wie ein Nenndurchmesser des Außengewindes der Schraube ist.

Gemäß einer weiteren Ausgestaltung hat der Schraubenkopf im Bereich der zylindrischen oder konischen Mantelfläche seinen größten Durchmesser.

Der Schraubenkopf liegt, wie bereits erwähnt, vorzugsweise vollflächig entlang seiner zylindrischen oder konischen Mantelfläche und seines am unteren Ende befindlichen, abgerundeten Kinns an der Suprakonstruktion in der internen Bohrung an.

Die Suprakonstruktion ist vorzugsweise aus Keramik hergestellt. Besonders bevorzugt wird die Suprakonstruktion anhand eines 3D-Modells auf einer Fräsmaschine hergestellt.

Gemäß einer weiteren Ausgestaltung weist der Schraubenkopf an seinem unteren Ende eine Anlagefläche auf, die quer zur Längsachse der Schraube ausgerichtet ist und in montiertem Zustand der Zahnprothese an einer Gegenanlagefläche der Suprakonstruktion anliegt. Unter "quer" wird vorliegend jede Lage unter einem Winkel ungleich 0° verstanden, also nicht parallel. Bevorzugt ist die Anlagefläche unter einem Winkel größer 60° zur Längsachse der Schraube ausgerichtet. Besonders bevorzugt ist die Anlagefläche orthogonal zur Längsachse der Schraube ausgerichtet.

Diese Anlagefläche hat den Vorteil, dass sich hierüber Kräfte in axialer Richtung übertragen lassen und somit ein Niederzug der Suprakonstruktion auf das Zahnimplantat bewirkt wird. Die Stabilität der Verbindung zwischen Suprakonstruktion und Zahnimplantat wird dadurch enorm verbessert.

Die an der Suprakonstruktion angeordnete Gegenanlagefläche ist vorzugsweise ebenfalls orthogonal zu der Längsachse der Zahnprothese ausgerichtet. In montiertem Zustand liegt die Anlagefläche vorzugsweise flächig oder zumindest linienförmig an der Gegenanlagefläche an.

Die Anlagefläche grenzt vorzugsweise an das konvex abgerundete Kinn an. Besonders bevorzugt handelt es sich bei der Anlagefläche und der Gegenanlagefläche jeweils um eine kreisringförmige Fläche.

Ausführungsbeispiele der Erfindung sind in den Zeichnungen dargestellt und werden in der nachfolgenden Beschreibung näher erläutert. Es zeigen:
- Fig. 1: eine Schnittansicht eines Ausführungsbeispiels der erfindungsgemäßen Zahnprothese;
- Fig. 2: eine perspektivische Ansicht eines beispielhaften Zahnimplantats, das in der erfindungsgemäßen Zahnprothese verwendbar ist;
- Fig. 3: eine Draufsicht von oben auf das in Fig. 2 gezeigte, beispielhafte Zahnimplantat;
- Fig. 4: eine Längsschnittansicht des in Fig. 2 gezeigten, beispielhaften Zahnimplantats;
- Fig. 5: eine perspektivische Ansicht eines weiteren beispielhaften Zahnimplantats, das in der erfindungsgemäßen Zahnprothese verwendbar ist;
- Fig. 6: eine Draufsicht von oben auf das in Fig. 5 gezeigte, beispielhafte Zahnimplantat;
- Fig. 7: eine Längsschnittansicht des in Fig. 5, beispielhaften Zahnimplantats;
- Fig. 8: eine perspektivische Detailansicht einer Unterseite einer zu dem in Fig. 2-4 gezeigten Zahnimplantat passenden Suprakonstruktion;
- Fig. 9: eine perspektivische Detailansicht einer Unterseite einer zu dem in Fig. 5-7 gezeigten Zahnimplantat passenden Suprakonstruktion; und
- Fig. 10: eine Schnittansicht eines zweiten Ausführungsbeispiels der erfindungsgemäßen Zahnprothese.

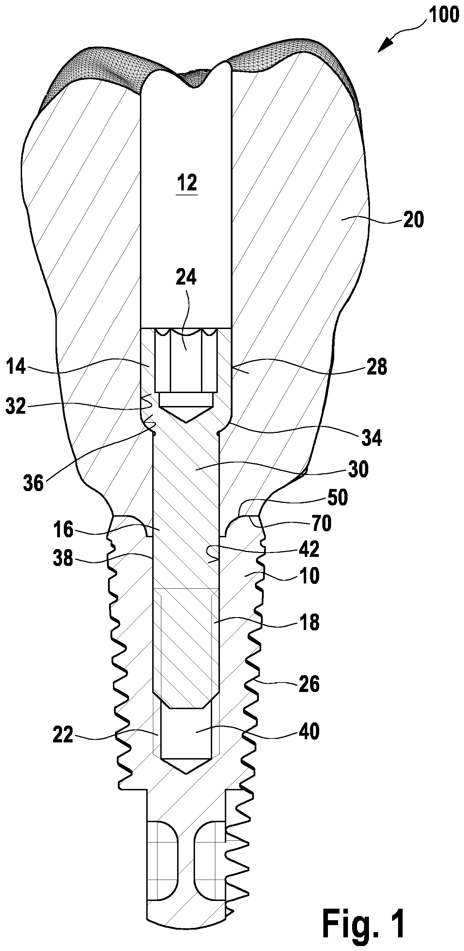

Fig. 1 zeigt ein Ausführungsbeispiel der erfindungsgemäßen Zahnprothese in einer Längsschnittansicht. Die Zahnprothese ist darin in ihrer Gesamtheit mit der Bezugsziffer 100 bezeichnet.

Die Zahnprothese 100 weist ein Zahnimplantat 10 auf, an dem eine Suprakonstruktion 20 (künstliche Zahnkrone) mit Hilfe einer Schraube 30 befestigt ist. Anders als bei herkömmlichen Zahnprothesen dieser Art ist die Suprakonstruktion 20 ohne ein dazwischen angeordnetes Abutment direkt mit dem Zahnimplantat 10 verbunden. Die Unterseite der Suprakonstruktion 20 liegt also unmittelbar an der Oberseite des Zahnimplantats 10 an.

Die Schraube 30 wird durch eine in der Suprakonstruktion 20 befindliche, interne Bohrung 12 hindurch in das Zahnimplantat 10 eingesetzt. Diese Bohrung 12 ist vorzugsweise als Durchgangsloch ausgestaltet, das nach dem Verbinden der Suprakonstruktion 20 mit dem Zahnimplantat 10 wieder geschlossen wird. Die Schraube 30 weist einen Schraubenkopf 14 auf, an dessen unteren Ende sich ein Schaft 16 anschließt. Am unteren Rand des Schafts 16 ist ein Außengewinde 18 angeordnet, welches in montiertem Zustand der Zahnprothese 100 in ein entsprechendes, im Zahnimplantat 10 angeordnetes Innengewinde 22 eingreift. Ein im Schraubenkopf 14 befindlicher Werkzeugeingriff 24 dient zum Anziehen der Schraube 30 mithilfe eines geeigneten Werkzeugschlüssels.

Das Zahnimplantat 10 weist auf seiner Außenseite ein Außengewinde 26 auf, mithilfe dessen das Zahnimplantat 10 in einen Kieferknochen eines Patienten eingeschraubt werden kann. Zunächst wird daher typischerweise das Zahnimplantat 10 in dem Kieferknochen des Patienten montiert, bevor die Suprakonstruktion 20 mithilfe der Schraube 30 an dem Zahnimplantat 10 befestigt wird. Anschließend wird die Bohrung 12 an ihrer Oberseite verschlossen und versiegelt, dass weder Feuchtigkeit noch Schmutz in das Innere der Suprakonstruktion eintreten können.

Das Zahnimplantat 10 ist typischerweise aus Titan oder Zirkonoxid. Die Suprakonstruktion 20 besteht meist aus Keramik, wenngleich sie grundsätzlich ebenfalls aus Titan oder Zirkonoxid hergestellt werden kann. Die Schraube 30 besteht vorzugsweise ebenfalls aus Titan oder alternativ dazu aus Stahl. Alle drei Bauteile 1, 20, 30 werden vorzugsweise anhand eines CAD-Datensatzes durch Fräsen, besonders bevorzugt mit Hilfe eines Kugelfräsers, automatisiert hergestellt.

Zur Herstellung einer besonders steifen und stabilen Verbindung weist die Schraube 30 eine spezielle Form auf, die an die jeweiligen Stellen der Suprakonstruktion 20 und des Zahnimplantats 10, an denen die Schraube 30 anliegt, angepasst ist.

Der Schraubenkopf 14 weist eine zylindrische Mantelfläche 28 auf, die in montiertem Zustand der Zahnprothese 100 an der Innenwand der internen Bohrung 12 anliegt. Die interne Bohrung 12 weist an dieser Stelle einen ebenfalls zylindrisch ausgestalteten Innenwandabschnitt 32 auf, der als Anlagefläche für die zylindrische Mantelfläche 28 des Schraubenkopfes 14 dient.

Gemäß einem alternativen, hier nicht explizit dargestellten Ausführungsbeispiel können die Mantelfläche 28 und der Innenwandabschnitt 32 auch leicht konisch ausgestaltet sein.

Unterhalb der zylindrischen oder konischen Mantelfläche 28 weist der Schraubenkopf 14 ein konvex abgerundetes Kinn 34 auf. Dieses Kinn 34 ist im Bereich des unteren Endes des Schraubenkopfes 14 angeordnet. Das Kinn 34 bildet sozusagen den Übergang zwischen der zylindrischen oder konischen Mantelfläche 28 und dem Schaft 16 der Schraube 30.

Korrespondierend zu dem konvex abgerundeten Kinn 34 ist die interne Bohrung 12 an dieser Stelle ebenfalls abgerundet ausgestaltet. Die Innenwand der Bohrung 12 weist an dieser Stelle einen konkav abgerundeten Innenwandabschnitt 36 auf. Der Schraubenkopf 14 der Schraube 30 liegt also vorzugsweise mit seiner zylindrischen oder konischen Mantelfläche 28 an dem Innenwandabschnitt 32 sowie mit seinem konvex abgerundeten Kinn 34 an dem konkaven Innenwandabschnitt 36 an. Hierdurch wird eine optimale Kraftübertragung von der Schraube 30 auf die Suprakonstruktion 20 erreicht. Insbesondere aufgrund des konvex abgerundeten Kinns 34 des Schraubenkopfes 14 lassen sich unerwünschte Scherkräfte, die beispielsweise zu einer Rissbildung innerhalb der Suprakonstruktion 20 führen könnten, vermeiden. Die Krafteinleitung erfolgt nämlich jeweils in radialer Richtung bezogen auf die Außenseite des Schraubenkopfes, so dass eine gleichmäßige Krafteinleitung erreicht wird, ohne dass es an verschiedenen Anlagestellen zu unerwünschten Spannungsspitzen kommt.

Das Kinn 34 des Schraubenkopfes 14 ist vorzugsweise exakt rund ausgestaltet. Besonders bevorzugt hat das Kinn 34 einen Radius von 0,5 mm. Ein solches rundes Kinn 34 mit Radius 0,5 mm lässt sich mit den typischerweise zur Herstellung dieser Zahnprothese 100 verwendeten Kugelfräsern mit 1 mm Durchmesser sehr einfach herstellen.

Oberhalb des Außengewindes 18, also zwischen dem Schraubenkopf 14 und dem Außengewinde 18, weist der Schaft 16 der Schraube 30 einen zylindrischen Abschnitt 38 ohne Gewinde auf. Ein Teil dieses zylindrischen Abschnitts 38 liegt in montiertem Zustand der Zahnprothese 100 an dem Zahnimplantat 10 an. Genauer gesagt, liegt dieser zylindrische Abschnitt 38 vorzugsweise plan an der Innenwand der im Zahnimplantat 10 befindlichen Bohrung 40 an, innerhalb derer das Innengewinde 22 angeordnet ist. Die Innenwand der im Zahnimplantat 10 befindlichen Bohrung 40 weist korrespondierend dazu ebenfalls einen zylindrischen Abschnitt 42 ohne Gewinde auf. Dieser zylindrische Abschnitt 42 ist oberhalb des Innengewindes 22 angeordnet. Durch die Anlage des zylindrischen Abschnitts 38 des Schrauben-Schafts 16 an dem zylindrischen Abschnitt 42 des Zahnimplantats 10 entsteht eine sehr stabile Verbindung der Schraube mit dem Zahnimplantat 10. Die Schraube wird dadurch wie eine Art Pfosten abgestützt. Dies ist vor allem von Vorteil, wenn verhältnismäßig weiche Materialien für die Suprakonstruktion 20 eingesetzt werden, da hierdurch die Gesamtstabilität der Zahnprothese 100 verbessert wird.

Der zylindrische Abschnitt 38 des Schrauben-Schafts 16 hat einen Durchmesser, der vorzugsweise gleich groß ist wie der Nenndurchmesser des weiter unten am SchraubenSchaft 16 vorgesehenen Außengewindes. Der Nenndurchmesser bezeichnet den größten Durchmesser der Gewindegeometrie.

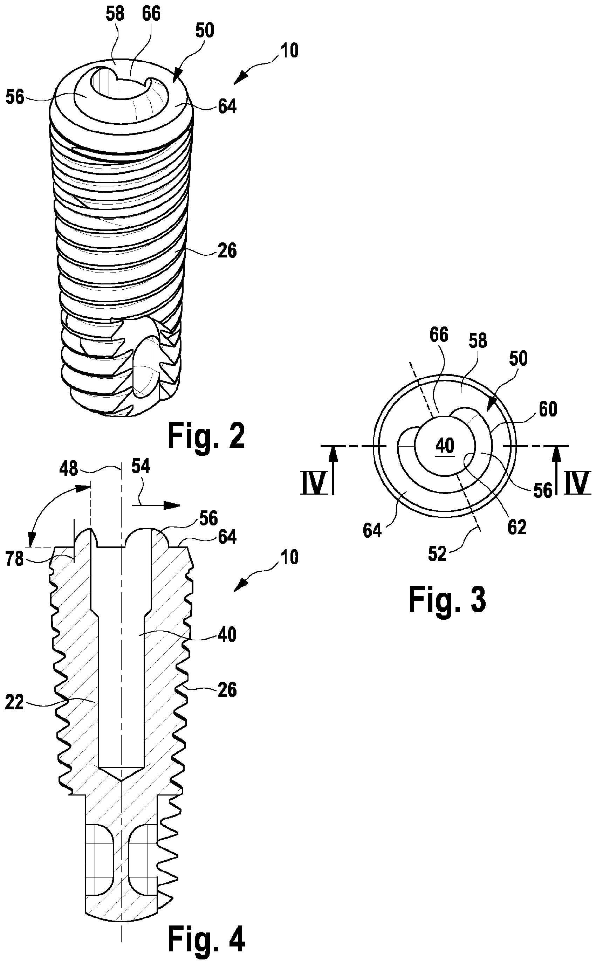

Das Zahnimplantat 10 erstreckt sich im Wesentlichen entlang einer Längsachse 48, welche auch als Mittelachse bezeichnet werden kann (siehe Fig. 4). Die im Inneren des Zahnimplantats verlaufende Bohrung 40 erstreckt sich entlang der Längsachse 48. Vorzugsweise ist die Bohrung 40 als Sacklochbohrung ausgestaltet.

An dem stirnseitigen oberen Ende weist das Zahnimplantat 10 eine Schnittstelle 50 (im Folgenden auch als "erste Schnittstelle 50" bezeichnet) auf. Diese Schnittstelle 50 dient der Befestigung der Suprakonstruktion 20 an dem Zahnimplantat 10. Die Schnittstelle 50 bildet sozusagen die Kontaktfläche, mit der das Zahnimplantat 10 die Suprakonstruktion 20 in montiertem Zustand kontaktiert.

Die Besonderheit der Schnittstelle 50 ist darin zu sehen, dass diese aufgrund ihrer Form und Konstruktion eine direkte Anbringung der Suprakonstruktion 20 an dem Zahnimplantat 10 ermöglicht (ohne die Verwendung eines dazwischen angeordneten Abutments). Die Fig. 2-4 und 5-7 zeigen zwei verschiedene Ausführungsbeispiele dieser Schnittstelle 50, welche bereits aus der Patentanmeldung 10 2018 113 237.9 bekannt sind.

In dem in Fig. 2-4 gezeigten Ausführungsbeispiel ist die Schnittstelle 50 zur Bildung einer Verdrehsicherung nicht-drehsymmetrisch in Bezug auf die Längsachse 48 des Zahnimplantats 10 ausgestaltet. Sie ist dagegen spielsymmetrisch in Bezug auf eine Längsschnittebene, welche in Fig. 3 mit einer gestrichelten Linie 52 angedeutet ist. Diese Längsschnittebene 52 wird durch die Längsachse 48 und die dazu orthogonal verlaufende Radialrichtung 54 aufgespannt. Sie teilt das Zahnimplantat 10 in zwei gleichgroße Hälften.

Die Schnittstelle 50 weist eine Wölbung 56 sowie eine die Wölbung 56 umgebende Auflagefläche 58 auf. Die Wölbung 56 dient im Wesentlichen der Aufnahme von Kräften in Radialrichtung 54. Die Auflagefläche 58 dient dagegen als axiale Auflage, welche im Wesentlichen Kräfte in Längsrichtung, also entlang der Längsachse 48, aufnimmt. Die Suprakonstruktion 20 stützt sich in montiertem Zustand sowohl an der Wölbung 56 als auch an der Auflagefläche 58 ab.

Die Wölbung 56 ist konvex, also nach außen gewölbt, ausgestaltet. Die Wölbung 56 ist abgerundet, also nicht eckig. Die Wölbung 56 erstreckt sich über einen Winkelbereich von mindestens 90° um die Längsachse 14 herum. In den in Fig. 2-4 gezeigten Ausführungsbeispiel ist dieser Winkelbereich sogar größer als 200°.

In diesem Ausführungsbeispiel ist die Wölbung 56 nicht-drehsymmetrisch ausgestaltet. Im Querschnitt betrachtet (s. Fig. 4) ist die Wölbung 56 vorzugsweise als Kreissektor mit einem Mittelpunktswinkel α von 90° ausgestaltet. Es versteht sich jedoch, dass auch andere Mittelpunktswinkel α möglich sind. Ebenso muss die Wölbung 56 im Querschnitt nicht zwangsläufig kreisrund sein. Sie kann auch elliptisch geformt oder als Freiformfläche ausgestaltet sein.

Der äußere Rand 60 und der innere Rand 62 der Wölbung 56 liegen vorzugsweise auf einer Kreislinie. In der in Fig. 3 gezeigten Draufsicht ist die Wölbung 56 somit zumindest abschnittsweise kreisringförmig. Die Wölbung 56 bildet demnach einen Teil der Oberfläche eines Torus.

Vorzugsweise grenzt die Wölbung 56 unmittelbar an die Bohrung 40 an. In dem in Fig. 2-4 gezeigten Ausführungsbeispiel bildet der innere Rand 62 der Wölbung 56 den oberen Rand der Bohrung 40. Der äußere Rand 60 der Wölbung 56 grenzt vorzugsweise unmittelbar an einen kreisringförmigen Abschnitt 64 der Auflagefläche 58 an. Dieser kreisringförmige Abschnitt 64 verläuft quer, vorzugsweise unter einem Winkel größer 60°, besonders bevorzugt orthogonal zu der Längsachse 48 des Zahnimplantats 10. Die Wölbung 56 steht gegenüber diesem kreisringförmigen Abschnitt 64 nach oben hin ab.

Wie ferner aus Fig. 2 und 3 ersichtlich ist, weist die Wölbung 56 an einem Teil ihres Umfangs einen Einschnitt 66 auf. An diesem Einschnitt 66 ist die Wölbung 56 unterbrochen. Der Einschnitt 66 dient als Verdrehsicherung zum Schutz einer Verdrehung der Suprakonstruktion 20 relativ zu dem Zahnimplantat 10.

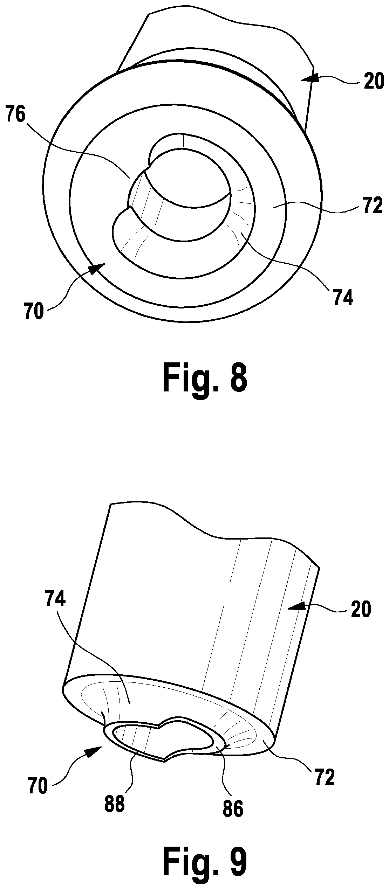

Fig. 8 zeigt die als Gegenstück an der Unterseite der Suprakonstruktion 20 geformte Schnittstelle 70, welche vorliegend als "zweite Schnittstelle" bezeichnet wird. Die Schnittstelle 70 weist ebenfalls eine Auflagefläche 72 mit zumindest einem kreisringförmigen Abschnitt auf. Als Gegenstück zu der konvexen Wölbung 56 weist die Schnittstelle 70 eine konkave Vertiefung 74 auf. Da diese konkave Vertiefung 74 durch einen Steg 76 unterbrochen ist, lassen sich Zahnimplantat 10 und Suprakonstruktion 20 nur in einer einzigen definierten Position relativ zueinander anordnen. Die Auflageflächen 58, 72 liegen dabei plan aneinander an und die konvexe Wölbung 56 greift in die konkave Vertiefung 74 ein.

Zur Bildung einer möglichst stabilen Verbindung zwischen dem Zahnimplantat 10 und der Suprakonstruktion 20 ist eine an den äußeren Rand 60 der Wölbung 56 anliegende Tangente 78 vorzugsweise orthogonal zu der Auflagefläche 58 bzw. dem kreisringförmigen Abschnitt 64 ausgerichtet (siehe Fig. 4). Der Winkel dieser Tangente 78 zu dem kreisringförmigen Abschnitt 64 der Auflagefläche 58 beträgt in diesem Ausführungsbeispiel des Zahnimplantats 10 vorzugsweise mindestens 60°. Dies ist nicht nur aufgrund der Stabilität, sondern auch aus Gründen der einfacheren Herstellbarkeit von Vorteil.

Bei Vergleich der Fig. 3 und 8 sei noch auf einen weiteren Vorteil der Schnittstellen 50, 70 hingewiesen. Durch einfache Modifikation der Schnittstelle 70 ist es möglich, die Verdrehsicherung aufzuheben. Indem beispielsweise der Steg 76 weggelassen wird und die konkave Vertiefung 74 ringsherum ausgeführt ist, ist die zur eindeutigen Positionierung zwischen Suprakonstruktion 20 und Zahnimplantat 10 notwendige Verdrehsicherung aufgehoben. Dies kann beispielsweise dann von Vorteil sein, wenn eine solche eindeutige Positionierung nicht gefordert ist. Dies ist beispielsweise im Fall einer Montage einer Brücke als Suprakonstruktion 20 auf dem Zahnimplantat 10 von Vorteil.

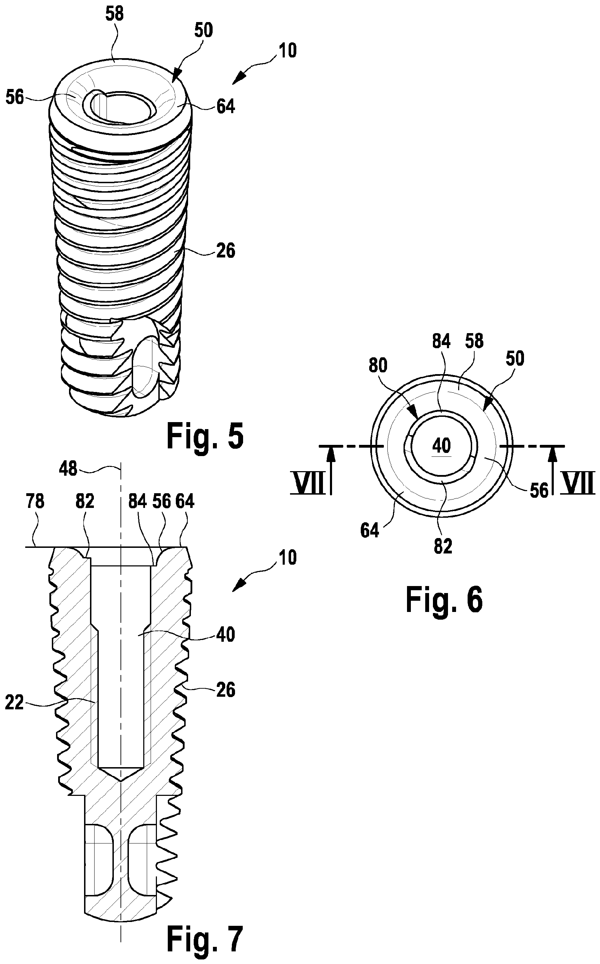

Fig. 5-7 zeigen ein zweites Ausführungsbeispiel des Zahnimplantats 10. Der Einfachheit halber wird nachfolgend lediglich auf die Unterschiede zu dem in Fig. 2-4 gezeigten ersten Ausführungsbeispiel eingegangen.

Die Auflagefläche 58 ist in dem in Fig. 5-7 gezeigten zweiten Ausführungsbeispiel durchgehend kreisringförmig ausgestaltet. Der kreisringförmige Abschnitt 64 bildet somit die gesamte Auflagefläche 58. Die konvexe Wölbung 56 ist zumindest teilweise innerhalb der Bohrung 40 angeordnet. Sie bildet das obere Ende der Bohrung 40.

Ein weiterer wesentlicher Unterschied zu dem ersten Ausführungsbeispiel besteht darin, dass die Tangente 78 parallel zu dem kreisringförmigen Abschnitt 64 der Auflagefläche 58 verläuft. Genauer gesagt, geht der kreisringförmige Abschnitt 64 der Auflagefläche 58 tangential in die konvexe Wölbung 56 über (s. Fig. 7). Die konvexe Wölbung 56 umgibt die Längsachse 48 in diesem Ausführungsbeispiel vollständig. Sie erstreckt sich also über einen Winkelbereich von 360° um die Längsachse 48. Demnach ist die konvexe Wölbung 56 gemäß diesem Ausführungsbeispiel drehsymmetrisch. Die Schnittstelle 50 ist in ihrer Gesamtheit nichtsdestotrotz nicht-drehsymmetrisch ausgestaltet. Sie weist neben der Auflagefläche 58 und der Wölbung 56 einen Verdrehsicherungsabschnitt 80 auf. Dieser Verdrehsicherungsabschnitt 80 ist in der Bohrung 40 räumlich betrachtet zwischen der konvexen Wölbung 56 und dem Innengewinde 22 angeordnet.

Der Verdrehsicherungsabschnitt 80 weist in dem in Fig. 5-7 gezeigten Ausführungsbeispiel zwei teilkreisringförmige Flächen 82, 84 auf, die zueinander entlang der Längsachse 48 versetzt angeordnet sind. Es versteht sich jedoch, dass diese beiden Flächen 82, 84 nicht zwangsläufig teilkreisringförmig sein müssen. Vorzugsweise sind die beiden Flächen 82, 84 orthogonal zu der Längsachse 48 ausgerichtet.

Fig. 9 zeigt die gemäß dem zweiten Ausführungsbeispiel als Gegenstück zu der Schnittstelle 50 dienende Schnittstelle 70, welche an der Unterseite der Suprakonstruktion 20 angeordnet ist. Die Auflagefläche 72 ist wiederum kreisringförmig ausgestaltet. Der konvexen Wölbung 56 entsprechend ist an der Unterseite der Suprakonstruktion 20 eine konkave Wölbung 74 vorgesehen, welche in diesem Fall gegenüber der Auflagefläche 72 nach unten hin absteht. Als Gegenstücke zu den Flächen 82, 84 sind im Anschluss an die konkave Wölbung 74 stirnseitig angeordnete Planflächen 86, 88 vorgesehen. Diese Planflächen 86, 88 sind hier ebenfalls als teilkreisförmige Flächen ausgestaltet sind und in Bezug auf die Längsachse 48 zueinander versetzt angeordnet sind.

In montiertem Zustand liegt die Auflagefläche 58 des Zahnimplantats10 an der Auflagefläche 72 der Suprakonstruktion 20 an, die konvexe Wölbung 56 an der konkaven Wölbung 74 an und die Flächen 82, 84 an den Flächen 86, 88 an. Auch hier ermöglichen die Schnittstellen 50, 70 wiederum nur eine einzige definierte Ausrichtung des Zahnimplantats 10 und der Suprakonstruktion 20 relativ zueinander.

Abschließend sei darauf hingewiesen, dass die beiden vorliegend gezeigten Ausführungsbeispiele des Zahnimplantats 10 lediglich zwei von vielen möglichen Ausführungsbeispielen darstellen. Es versteht sich, dass diverse Merkmale dieser beiden Ausführungsbeispiele ohne Weiteres abwandelbar sind, ohne den Rahmen der vorliegenden Erfindung, wie sie in den beigefügten Ansprüchen definiert ist, zu verlassen. Ebenso versteht es sich, dass diverse Merkmale dieser beiden Ausführungsbeispiele miteinander kombinierbar und/oder untereinander austauschbar sind, ohne den Rahmen der vorliegenden Erfindung, wie sie in den beigefügten Ansprüchen definiert ist, zu verlassen.

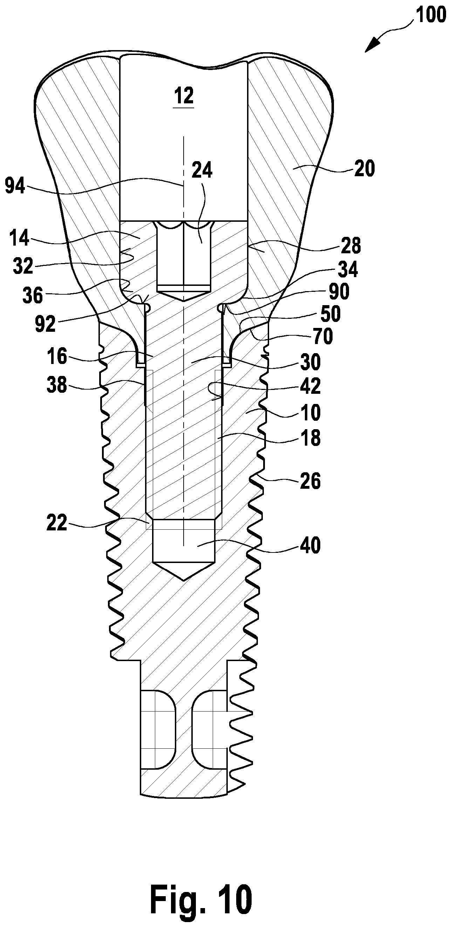

Fig. 10 zeigt ein zweites Ausführungsbeispiel der erfindungsgemäßen Zahnprothese. Darin sind gleiche oder äquivalente Bauteile mit den gleichen Bezugszeichen wie zuvor gekennzeichnet.

Der wesentliche Unterschied zu dem in Fig. 1 gezeigten, ersten Ausführungsbeispiel besteht in der Art der Ausgestaltung des Schraubenkopfes 14 und der äquivalent dazu ausgestalteten Form der Suprakonstruktion 20 im Inneren der Bohrung 12.

Der Schraubenkopf 14 weist an seinem unteren Ende eine Anlagefläche 90 auf, die quer, bevorzugt unter einem Winkel größer 60°, besonders bevorzugt orthogonal zu der Längsachse 94 der Schraube 30 ausgerichtet ist. Da die Längsachse 48 des Zahnimplantats 10 in montiertem Zustand der Zahnprothese 100 mit der Längsachse 94 der Schraube 30 zusammenfällt, ist die Anlagefläche 90 somit auch quer bzw. besonders bevorzugt orthogonal zu der Längsachse 48 des Zahnimplantats 10 ausgerichtet.

Die Anlagefläche 90 ist als kreisringförmige Fläche ausgestaltet. Sie grenzt unmittelbar an das konvex abgerundete Kinn 34 des Schraubenkopfes 14 an. Ebenso ist es jedoch auch möglich, dass die Anlagefläche 90 von dem konvex abgerundeten Kinn 34 beispielsweise durch einen Freistich getrennt ist.

Die Anlagefläche 90 liegt in montiertem Zustand der Zahnprothese 100 an einer äquivalent dazu geformten Gegenanlagefläche 92 der Suprakonstruktion 20 an. Dies ermöglicht eine direkte Übertragung von Kräften in axialer Richtung. Der dadurch entstehende Niederzug der Suprakonstruktion sorgt für eine extrem stabile Verbindung zwischen Suprakonstruktion 20 und Zahnimplantat 10.

## Patentansprüche

1. Zahnprothese (100), aufweisend:
- ein Zahnimplantat (10) mit einem Außengewinde (26) zum Einschrauben des Zahnimplantats (10) in einen Kieferknochen und mit einem im Inneren des Zahnimplantats (10) angeordneten Innengewinde (22);
- eine Suprakonstruktion (20) mit einer internen Bohrung (12); und
- eine Schraube (30) zur Befestigung der Suprakonstruktion (20) an dem Zahnimplantat (10), wobei die Schraube (30) einen Schraubenkopf (14) mit einer zylindrischen oder konischen Mantelfläche (28) und einen sich an ein unteres Ende des Schraubenkopfes (14) anschließenden Schaft (16) aufweist, an dem ein Außengewinde (18) angeordnet ist,
wobei in montiertem Zustand der Zahnprothese (100) die Schraube (30) durch die interne Bohrung (12) der Suprakonstruktion (20) in das Zahnimplantat (10) eingesetzt ist und das Außengewinde (18) der Schraube (30) in das Innengewinde (22) des Zahnimplantats (10) eingreift, und
wobei der Schraubenkopf (14) zwischen der zylindrischen oder konischen Mantelfläche (28) und seinem unteren Ende ein konvex abgerundetes Kinn (34) aufweist, mit dem die Schraube (30) in montiertem Zustand der Zahnprothese (100) an der Suprakonstruktion (20) in der internen Bohrung (12) anliegt,
**dadurch gekennzeichnet, dass** (i) die zylindrische oder konische Mantelfläche (28) des Schraubenkopfes (14) an der Suprakonstruktion (20) in der internen Bohrung (12) anliegt, und/oder dass (ii) der Schaft (16) in einem oberen Bereich, welcher an das untere Ende des Schraubenkopfes (14) angrenzt, einen zylindrischen Abschnitt (36) ohne Gewinde aufweist, der in montiertem Zustand der Zahnprothese (100) an dem Zahnimplantat (10) anliegt.

2. Zahnprothese gemäß Anspruch 1, wobei in montiertem Zustand der Zahnprothese (100) die Suprakonstruktion (20) unmittelbar an dem Zahnimplantat (10) anliegt.

3. Zahnprothese gemäß Anspruch 1 oder 2, wobei das Kinn (34) des Schraubenkopfes (14) einen runden Querschnitt hat.

4. Zahnprothese gemäß Anspruch 3, wobei der runde Querschnitt einen Radius von 0,5 mm hat.

5. Zahnprothese gemäß Anspruch 1, wobei der zylindrische Abschnitt (36) des Schafts (16) einen Durchmesser aufweist, der gleich groß wie ein Nenndurchmesser des Außengewindes (18) der Schraube (30) ist.

6. Zahnprothese gemäß einem der Ansprüche 1-5, wobei der Schraubenkopf (14) im Bereich der zylindrischen oder konischen Mantelfläche (28) seinen größten Durchmesser hat.

7. Zahnprothese gemäß einem der Ansprüche 1-6, wobei die Suprakonstruktion (20) aus Keramik ist.

8. Zahnprothese gemäß einem der Ansprüche 1-7, wobei der Schraubenkopf (14) an seinem unteren Ende eine Anlagefläche (90) aufweist, die quer zur Längsachse (94) der Schraube (30) ausgerichtet ist und in montiertem Zustand der Zahnprothese an einer Gegenanlagefläche (92) der Suprakonstruktion anliegt.

9. Zahnprothese gemäß Anspruch 8, wobei die Anlagefläche (90) an das konvex abgerundete Kinn (34) angrenzt.

10. Zahnprothese nach Anspruch 8 oder 9, wobei die Anlagefläche (90) kreisringförmig ausgestaltet ist.

11. Zahnprothese nach einem der Ansprüche 8-10, wobei die Anlagefläche (90) orthogonal zur Längsachse (94) der Schraube (30) ausgerichtet ist.

## Claims

1. Dental prosthesis (100), comprising:
- a dental implant (10) having an external thread (26) for screwing the dental implant (10) into a jawbone and having an internal thread (22) arranged inside the dental implant (10);
- a superstructure (20) having an internal bore (12); and
- a screw (30) for fastening the superstructure (20) to the dental implant (10), wherein the screw (30) comprises a screw head (14) having a cylindrical or conical lateral surface (28) and a shank (16) which adjoins a lower end of the screw head (14) and on which an external thread (18) is arranged,
wherein, in an assembled state of the dental prosthesis (100), the screw (30) is inserted through the internal bore (12) of the superstructure (20) into the dental implant (10) and the external thread (18) of the screw (30) engages the internal thread (22) of the dental implant (10), and
wherein the screw head (14) comprises a convexly rounded chin (34) between the cylindrical or conical lateral surface (28) and its lower end, with which chin the screw (30) abuts the superstructure (20) in the internal bore (12) in the assembled state of the dental prosthesis (100),
**characterized in that** (i) the cylindrical or conical lateral surface (28) of the screw head (14) abuts the superstructure (20) in the internal bore (12), and/or that (ii) the shank (16) comprises, in an upper region adjacent the lower end of the screw head (14), a non-threaded cylindrical portion (36) that abuts the dental implant (10) in the assembled state of the dental prosthesis (100).

2. Dental prosthesis according to claim 1, wherein the superstructure (20) directly abuts the dental implant (10) in the assembled state of the dental prosthesis (100).

3. Dental prosthesis according to claim 1 or 2, wherein the chin (34) of the screw head (14) has a round cross-section.

4. Dental prosthesis according to claim 3, wherein the round cross-section has a radius of 0.5 mm.

5. Dental prosthesis according to claim 1, wherein the cylindrical portion (36) of the shank (16) has a diameter equal to a nominal diameter of the external thread (18) of the screw (30).

6. Dental prosthesis according to any of claims 1-5, wherein the screw head (14) has its largest diameter in the region of the cylindrical or conical lateral surface (28).

7. Dental prosthesis according to any one of claims 1-6, wherein the superstructure (20) is made of ceramic.

8. Dental prosthesis according to any of claims 1-7, wherein the screw head (14) has at its lower end an abutment surface (90) which is oriented transversely to a longitudinal axis (94) of the screw (30) and abuts a mating abutment surface (92) of the superstructure in the assembled state of the dental prosthesis.

9. Dental prosthesis according to claim 8, wherein the abutment surface (90) adjoins the convexly rounded chin (34).

10. Dental prosthesis according to claim 8 or 9, wherein the abutment surface (90) is configured to be annular.

11. Dental prosthesis according to any of claims 8-10, wherein the abutment surface (90) is oriented orthogonally to the longitudinal axis (94) of the screw (30).

## Revendications

1. Prothèse dentaire (100), comportant :
- un implant dentaire (10) pourvu d'un filetage extérieur (26) destiné à visser l'implant dentaire (10) dans un os de mâchoire et d'un filetage intérieur (22) disposé à l'intérieur de l'implant dentaire (10) ;
- une superstructure (20) pourvue d'un alésage intérieur (12) ; et
- une vis (30) destinée à fixer la superstructure (20) à l'implant dentaire (10), la vis (30) comportant une tête de vis (14) pourvue d'une surface latérale cylindrique ou conique (28) et une tige (16) qui est adjacente à une extrémité inférieure de la tête de vis (14) et au niveau de laquelle est disposé un filetage extérieur (18),
lorsque la prothèse dentaire (100) est montée, la vis (30) étant insérée dans l'implant dentaire (10) à travers l'alésage intérieur (12) de la superstructure (20) et le filetage extérieur (18) de la vis (30) s'engrenant dans le filetage intérieur (22) de l'implant dentaire (10), et
la tête de vis (14) comportant entre la surface latérale cylindrique ou conique (28) et son extrémité inférieure un menton arrondi convexe (34) avec lequel la vis (30) vient en appui sur la superstructure (20) de l'alésage intérieur (12) lorsque la prothèse dentaire (100) est montée,
**caractérisée en ce que** (i) la surface latérale cylindrique ou conique (28) de la tête de vis (14) vient en appui sur la superstructure (20) de l'alésage intérieur (12), et/ou **en ce que** (ii) la tige (16) comporte, dans une région supérieure qui est adjacente à l'extrémité inférieure de la tête de vis (14), une portion cylindrique (36) sans filetage qui vient en appui sur l'implant dentaire (10) lorsque la prothèse dentaire (100) est montée.

2. Prothèse dentaire selon la revendication 1, **caractérisée en ce que**, lorsque la prothèse dentaire (100) est montée, la superstructure (20) vient en appui directement sur l'implant dentaire (10).

3. Prothèse dentaire selon la revendication 1 ou 2, le menton (34) de la tête de vis (14) ayant une section transversale ronde.

4. Prothèse dentaire selon la revendication 3, la section transversale ronde ayant un rayon de 0,5 mm.

5. Prothèse dentaire selon la revendication 1, la portion cylindrique (36) de la tige (16) ayant un diamètre qui est de même dimension qu'un diamètre nominal du filetage extérieur (18) de la vis (30).

6. Prothèse dentaire selon l'une des revendications 1 à 5, la tête de vis (14) ayant son plus grand diamètre dans la région de la surface latérale cylindrique ou conique (28).

7. Prothèse dentaire selon l'une des revendications 1 à 6, la superstructure (20) étant en céramique.

8. Prothèse dentaire selon l'une des revendications 1 à 7, la tête de vis (14) comportant à son extrémité inférieure une surface d'appui (90) qui est orientée transversalement à l'axe longitudinal (94) de la vis (30) et qui vient en appui sur une surface d'appui homologue (92) de la superstructure lorsque la prothèse dentaire est montée.

9. Prothèse dentaire selon la revendication 8, la surface d'appui (90) étant adjacente au menton arrondi convexe (34).

10. Prothèse dentaire selon la revendication 8 ou 9, la surface d'appui (90) étant conçue sous la forme d'un anneau circulaire.

11. Prothèse dentaire selon l'une des revendications 8 à 10, la surface d'appui (90) est orientée orthogonalement à l'axe longitudinal (94) de la vis (30).
